# FASCICULE DE BREVET EUROPEEN

(11) **EP 3 942 277 B1**
(45) Date de publication et mention de la délivrance du brevet: **08.05.2024**
(21) Numéro de dépôt: 20711769.8
(22) Date de dépôt: 19.03.2020
(51) Int. Cl.: G01N 3/04, G01N 3/06

(54) **DISPOSITIF DE CHARGEMENT MÉCANIQUE IN SITU EN LAMINOGRAPHIE**
MECHANISCHE IN-SITU-LADEVORRICHTUNG FÜR LAMINOGRAFIE
LAMINOGRAPHY IN-SITU MECHANICAL LOADING DEVICE

(30) Priorité: 21.03.2019 FR 1902929
(43) Date de publication de la demande: 26.01.2022
(73) Titulaire: Centre national de la recherche scientifique, 75016 Paris (FR); École Normale Supérieure Paris-Saclay, 91190 Gif-sur-Yvette (FR); Association pour la Recherche et le Développement des Méthodes et Processus Industriels "ARMINES", 75006 Paris (FR)
(72) Inventeur: BULJAC, Ante, 94234 CACHAN cedex (FR); HILD, François, 92290 CHATENAY-MALABRY (FR); MORGENEYER, Thilo, 75013 PARIS (FR)
(74) Mandataire: Hautier IP
(86) Numéro de dépôt international: PCT/EP2020/057592
(87) Numéro de publication internationale: WO 2020/188026

(56) Documents cités:
- US-A- 4 198 870
- US-A- 5 598 738
- ANTE BULJAC ET AL: "In Situ Observation of Strained Bands and Ductile Damage in Thin AA2139-T3 Alloy Sheets", PROCEDIA IUTAM, vol. 20, 22 mars 2017 (2017-03-22), pages 66-72, XP055649535, ISSN: 2210-9838, DOI: 10.1016/j.piutam.2017.03.009

## Description

### Domaine technique

La présente invention se rapporte au domaine des essais mécaniques et cible plus précisément des essais mécaniques réalisés sur des pièces de tailles macroscopiques préalablement usinées et prêtes à l'utilisation. La présente invention concerne un dispositif pour réaliser des essais de traction et/ou de fissuration et/ou de compression et/ou de flexion sur de tels échantillons.

La présente invention vise à analyser les modifications structurales d'un échantillon en imageant, à l'échelle nanométrique et sous chargement mécanique, i.e. in situ. L'imagerie vise à renseigner quant à la microstructure de l'échantillon étudié en termes de mécanismes de déformation, d'endommagement et de rupture. L'invention concerne en particulier un dispositif de chargement mécanique in situ en nanolaminographie pour l'amorçage et la propagation d'une fissure sous chargement monotone.

### Etat de la technique antérieure

On connait dans l'état de la technique antérieure des supports pour l'imagerie ne permettant pas de réaliser des essais mécaniques concomitamment à l'étape d'imagerie consistant à analyser la microstructure de l'échantillon. En pratique, les supports de l'état de l'art nécessitent de procéder aux essais mécaniques préalablement à l'imagerie de l'échantillon. Les supports de l'état de la technique ne permettent pas non plus de réaliser des caractérisations structurales de volumes d'échantillon à l'échelle nanométrique. Les supports de l'état de l'art visent à imager de larges volumes d'échantillons. Enfin, les supports de l'état de la technique ne permettent pas d'analyser des échantillons dont la taille est de l'ordre ou supérieure à la dizaine de centimètre in situ et avec une résolution nanométrique.

"In Situ Observation of Strained Bands and Ductile Damage in Thin AA2139-T3 Alloy Sheets", par Ante Buljac et al. (publié le 22 mars 2017) divulgue un support pour essais mécaniques in situ en laminographie sans cavité.

Un but de l'invention est notamment de :
- imager un échantillon afin de caractériser la microstructure initiale et son évolution sous chargement mécanique de ce dernier lorsqu'il est soumis simultanément à des essais mécaniques, et/ou
- réaliser des caractérisations structurales, par imagerie, d'un volume d'échantillon nanométrique, et/ou
- mesurer des cinétiques et/ou cinématiques d'endommagement d'un échantillon en imageant l'échantillon qui est simultanément soumis à des chargements mécaniques, et/ou
- mesurer la cinématique et/ou déterminer des cinétiques d'endommagement d'un échantillon en imageant l'échantillon qui est simultanément soumis à des chargements mécaniques, et/ou
- réaliser des caractérisations, par imagerie, d'un échantillon dont la taille est de l'ordre ou supérieure à quelques centimètres,
- de proposer un support pour une telle imagerie et/ou mesure et/ou caractérisation.

### Présentation de l'invention

A cet effet, il est proposé un support pour essais mécaniques comprenant une cavité. La cavité comprend :
- une première zone, agencée pour accueillir une première portion d'un échantillon complémentaire de la première zone de la cavité, ladite première zone comprenant des moyens de maintien de l'échantillon,
- une deuxième zone agencée pour accueillir une deuxième portion de l'échantillon. Les première et deuxième zones de la cavité sont contiguës et agencées pour accueillir les première et deuxième portions d'un échantillon d'un seul tenant.

- un moyen, dit de chargement mécanique, comprenant un élément de transfert agencé pour être mis en mouvement dans la deuxième zone de la cavité de sorte à :
   - exercer une force mécanique dans ladite deuxième zone de la cavité, et/ou
   - lorsqu'un échantillon est placé dans la cavité, exercer une force mécanique sur la deuxième portion de l'échantillon générant des contraintes et déformations dans une région donnée de l'échantillon.

De préférence, le support selon l'invention vise à être disposé sur le trajet d'un faisceau de rayons X. Ce faisceau de rayons X provient d'une source de rayons X qui, selon le cas, peut être celle d'un dispositif d'imagerie, par exemple un laminographe, ou peut être issue d'une ligne de lumière d'un synchrotron. En particulier, le support selon l'invention peut être utilisé au sein de dispositifs d'imagerie par rayons X pour analyser des modifications de la microstructure d'un échantillon en imageant, à l'échelle nanométrique et sous chargement mécanique, i.e. in situ. Il est entendu par in situ, le fait que l'imagerie soit faite lorsque l'échantillon soit chargé mécaniquement. Ainsi, l'échantillon peut ne pas être manipulé durant le processus d'analyse, c'est-à-dire que l'échantillon peut ne pas être retiré du support et que le support peut ne pas être déplacé. Les première et deuxième zones de la cavité peuvent présenter des formes différentes l'une de l'autre.

Le support selon l'invention est, de préférence, un support pour essais mécaniques in situ en laminographie.

La cavité peut être comprise entre deux faces planes du support séparées d'une distance constituant une épaisseur de la cavité, ladite cavité présentant une forme de fente s'étendant selon un plan.

De préférence, la cavité est au moins en partie comprise entre les deux faces planes du support, lesdites deux faces planes du support étant séparées d'une distance constituant une épaisseur de la cavité, ladite cavité présentant une forme de fente s'étendant selon un plan. L'épaisseur de la cavité peut varier le long du plan selon lequel s'étend la fente.

L'élément de transfert peut être agencé pour exercer une force selon une direction s'étendant depuis la première vers la deuxième zone de la cavité.

De préférence, l'élément de transfert est mis en mouvement uniquement dans la deuxième zone de la cavité.

Le moyen de chargement mécanique peut être agencé pour convertir un mouvement de rotation en un mouvement de translation, de préférence selon une direction s'étendant depuis la première vers la deuxième zone de la cavité.

La deuxième zone de la cavité peut comprendre une partie formant levier, dite partie de levier, agencée pour que l'élément de transfert exerce une force dans ladite partie de levier de la deuxième zone de la cavité.

La deuxième zone de la cavité peut comprendre un guide agencé pour contraindre l'élément de transfert à se déplacer le long dudit guide selon un mouvement de translation dans le plan dans lequel s'étend la cavité.

Selon l'invention, le guide peut être défini comme faisant partie de la cavité. Selon l'invention, l'épaisseur de la cavité peut être définie comme étant la distance séparant les deux faces planes du support.

Selon l'invention, l'épaisseur de la cavité peut être définie comme n'étant pas la distance séparant des parois du guide entre lesquelles s'étend la cavité.

Les moyens de maintien peuvent être agencés pour immobiliser la première portion de l'échantillon dans le support, de préférence dans la cavité, de préférence encore dans la première zone de la cavité.

Les moyens de maintien peuvent être agencés pour enchâsser ou enserrer, lorsqu'un échantillon est placé dans la cavité, la première portion de l'échantillon de sorte à immobiliser la première portion de l'échantillon dans la première zone de la cavité.

Les moyens de maintien peuvent comprendre un logement, agencé pour recevoir une partie saillante de la première portion de l'échantillon, complémentaire du logement.

La première zone de la cavité peut comprendre un épaulement qui est contigu au logement de la cavité et qui s'étend depuis la première zone vers la deuxième zone de la cavité.

La première zone de la cavité peut comprendre une paroi, dite de maintien, située en regard de l'épaulement.

Le support peut comprendre :
- une paroi de la première zone de la cavité s'étendant depuis le logement de la première zone de la cavité jusqu'à la paroi de maintien,
- une ouverture s'étendant depuis l'épaulement jusqu'à la paroi de maintien et reliant les première et deuxième zones de la cavité.

Le logement de la première zone de la cavité peut comprendre :
- une première paroi latérale s'étendant selon une direction reliant le logement à la paroi de maintien,
- une deuxième paroi latérale située en regard de la première paroi latérale du support,
- une paroi de fond du logement de la première zone reliant les première et deuxième parois latérales du logement du support ;
la paroi de fond du logement de la première zone et les première et deuxième parois latérales du logement du support étant agencées de sorte à présenter une forme en U.

La partie de levier peut être en saillie par rapport à un plan comprenant la paroi de fond du logement de la première zone de la cavité selon une direction reliant la paroi de maintien au logement.

Le support peut comprendre au moins un raidisseur agencé pour augmenter une résistance du support au flambement, ledit au moins un raidisseur s'étendant le long :
- d'une bordure du support située au niveau de la première paroi latérale, et
- d'une bordure du support située au niveau de la paroi de maintien.

Le moyen de chargement mécanique peut comprendre une vis agencée pour être vissée dans le support, et l'élément de transfert peut être agencé pour coopérer avec une tête de la vis de sorte à, lorsqu'un échantillon est placé dans la cavité, transférer la force exercée lors de la rotation de la vis depuis la tête de la vis vers la deuxième portion de l'échantillon.

La vis peut être agencée pour se déplacer, en étant mise en rotation, en longeant une bordure de la première zone de la cavité.

Selon l'invention, les zones ou parties ou volumes du support, tels que par exemple la cavité, les zones de la cavité, le logement de la cavité, la fente, le guide, la partie formant le levier, sont des volumes d'espaces formés par des parois qui les délimitent. Ces volumes d'espaces, en particulier ceux du support, tels que définis selon l'invention, peuvent être définis comme comprenant les parois qui les délimitent.

Selon l'invention, un volume d'espace, qui est délimité par des parois, par exemple un volume d'espace du support, en particulier de la cavité, tel que par exemple le logement ou les moyens de maintien, peut constituer un moyen de maintien dès lors que sa forme est complémentaire de la forme d'une partie de l'échantillon qui est destinée à être introduite ou placée ou disposée ou positionnée dans le volume d'espace en question.

Selon l'invention, il peut être entendu par « complémentaire », au sens qu'une partie d'un premier objet est dite complémentaire d'une partie d'un second objet, le fait que l'agencement, par exemple la forme et/ou le volume, de la partie du premier objet est spécialement conçu pour recevoir la partie du second objet qui est complémentaire. Selon l'invention, « complémentaire » ne signifie pas seulement que la partie du premier objet est apte à recevoir la partie du second objet. Ceci est le cas, en particulier, pour :
- le logement des moyens de maintien qui est de préférence complémentaire de la partie saillante de la première portion de l'échantillon, et
- la première zone de la cavité qui est complémentaire de la première portion de l'échantillon.

L'invention concerne aussi :
- une utilisation du support selon l'invention comme support d'échantillon pour laminographe, en particulier pour nanolaminographe, et/ou
- une utilisation du support selon l'invention en laminographie, en particulier en nanolaminographe.

De préférence, le support selon l'invention est un support pour essais mécaniques et/ou pour chargements mécaniques in situ en laminographie, de préférence en nanolaminographie.

Selon l'invention, il est également proposé un ensemble comprenant le support selon l'invention et un échantillon dans la cavité du support, l'ensemble comprenant un concentrateur de contraintes et de déformations ménagé dans l'échantillon de sorte à positionner la région donnée de l'échantillon dans laquelle sont générées les contraintes et déformations.

Selon l'invention, il est également proposé un dispositif d'imagerie par rayons X comprenant :
- un support pour essai mécanique selon l'invention,
- une source de rayons X,
- au moins un détecteur agencé pour détecter des rayons X transmis et/ou diffractés et/ou diffusés à travers la région donnée de l'échantillon dans laquelle sont générées les contraintes et déformations.

Selon l'invention, il est également proposé un dispositif d'imagerie par rayon X comprenant :
- un ensemble selon l'invention,
- une source de rayons X,
- au moins un détecteur agencé pour détecter des rayons X transmis et/ou diffractés et/ou diffusés à travers la région donnée de l'échantillon dans laquelle sont générées les contraintes et déformations.

Selon l'invention, il est également proposé un procédé d'analyse par rayons X d'un échantillon selon la revendication 20.

Le procédé d'analyse par rayons X d'un échantillon peut comprendre une étape consistant à réaliser, au moyen du dispositif d'imagerie par rayons X des mesures sur l'échantillon. De préférence, le dispositif d'imagerie par rayons X est un dispositif d'analyse par laminographie. De préférence, les mesures réalisées sur l'échantillon consistent à imager un volume de l'échantillon.

Le procédé d'analyse par rayons X d'un échantillon comprend une étape consistant à appliquer une charge mécanique, au moyen du support pour essais mécaniques selon l'invention, à l'échantillon. L'étape d'application de la charge mécanique peut être réalisée concomitamment ou subséquemment à l'étape consistant à réaliser des mesures par rayons X sur l'échantillon. De préférence, l'étape d'application de la charge mécanique est réalisée sans retirer, ni déplacer, l'échantillon :
- du dispositif d'imagerie par rayons X, et/ou
- du trajet d'un faisceau de rayons X émis par la source de rayons X, la source de rayons X pouvant être une source de rayons X du dispositif d'imagerie.

De préférence, le procédé pour l'analyse par rayons X d'un échantillon sous chargements mécaniques selon l'invention est un procédé pour l'analyse par rayons X en laminographie d'un échantillon sous chargements mécaniques in situ.

L'étape consistant à exercer une force mécanique générant des contraintes et déformations dans la région donnée de l'échantillon peut consister à, lorsqu'un échantillon est placé dans la cavité du support de l'échantillon, exercer une force mécanique sur la deuxième portion de l'échantillon.

Le procédé peut comprendre une étape consistant à fournir deux faces planes au support entre lesquelles est comprise la cavité, lesdites deux faces planes du support étant séparées d'une distance constituant une épaisseur de la cavité, ladite cavité présentant une forme de fente s'étendant selon un plan.

Le procédé peut comprendre de préférence une étape consistant à fournir deux faces planes au support entre lesquelles est comprise au moins en partie la cavité, lesdites deux faces planes du support étant séparées d'une distance constituant une épaisseur de la cavité, ladite cavité présentant une forme de fente s'étendant selon un plan.

Le procédé peut comprendre une étape consistant à exercer une force, au moyen de l'élément de transfert, selon une direction s'étendant depuis la première vers la deuxième zone de la cavité.

Le procédé peut comprendre une étape consistant à convertir, via le moyen de chargement mécanique, un mouvement de rotation en un mouvement de translation selon la direction s'étendant depuis la première vers la deuxième zone de la cavité.

Le procédé peut comprendre une étape consistant à fournir une partie formant levier, dite partie de levier, à la deuxième zone de la cavité de sorte que l'élément de transfert exerce une force dans ladite partie de levier de la deuxième zone de la cavité.

La partie de levier peut être en saillie par rapport à un plan comprenant la paroi de fond du logement de la première zone de la cavité selon une direction reliant la paroi de maintien au logement.

Le procédé peut comprendre une étape consistant à fournir un guide à la cavité de sorte à contraindre l'élément de transfert à se déplacer le long dudit guide selon un mouvement de translation dans le plan dans lequel s'étend la cavité.

Lorsqu'un échantillon est placé dans la cavité, le procédé peut comprendre une étape consistant à immobiliser la première portion de l'échantillon dans la première zone de la cavité.

Lorsqu'un échantillon est placé dans la cavité, le procédé peut comprendre une étape consistant à enchâsser ou enserrer, dans les moyens de maintien, la première portion de l'échantillon de sorte à immobiliser la première portion de l'échantillon dans la première zone de la cavité.

Le procédé peut comprendre une étape consistant à fournir un logement aux moyens de maintien du support de sorte à enchâsser ou enserrer la première portion de l'échantillon dans les moyens de maintien du support de sorte à immobiliser la première portion de l'échantillon dans la première zone de la cavité.

Une partie saillante de la première portion de l'échantillon peut être complémentaire du logement.

Le procédé peut comprendre une étape consistant à fournir un épaulement à la première zone de la cavité, l'épaulement étant contigu au logement de la cavité et s'étendant depuis la première zone vers la deuxième zone de la cavité.

Le procédé peut comprendre une étape consistant à fournir une paroi, dite de maintien, à la première zone de la cavité, ladite paroi de maintien étant située en regard de l'épaulement.

La paroi de maintien peut s'étendre depuis le logement de la première zone de la cavité jusqu'à la paroi de maintien.

Le procédé peut comprendre une étape consistant à fournir une ouverture au support, ladite ouverture s'étendant depuis l'épaulement jusqu'à la paroi de maintien et reliant les première et deuxième zones de la cavité.

Le procédé peut comprendre une étape consistant à fournir :
- une première paroi latérale au logement de la première zone de la cavité, ladite paroi latérale s'étendant selon une direction reliant le logement à la paroi de maintien,
- une deuxième paroi latérale au logement de la première zone de la cavité, ladite deuxième paroi latérale étant située en regard de la première paroi latérale du support,
- une paroi de fond du logement de la première zone de la cavité, ladite paroi de fond du logement reliant les première et deuxième parois latérales du logement du support ;
la paroi de fond du logement de la première zone et les première et deuxième parois latérales du logement du support présentant une forme en U.

Le procédé peut comprendre une étape consistant à fournir au moins un raidisseur au support de sorte à augmenter une résistance du support au flambement, ledit au moins un raidisseur s'étendant le long :
- d'une bordure du support située au niveau de la première paroi latérale, et
- d'une bordure du support située au niveau de la paroi de maintien.

Le procédé peut comprendre une étape consistant à fournir une vis au moyen de chargement mécanique, ladite vis étant vissée dans le support de sorte que l'élément de transfert coopère avec une tête de la vis de sorte à, lorsqu'un échantillon est placé dans la cavité, transférer la force exercée lors de la rotation de la vis depuis la tête de la vis vers la deuxième portion de l'échantillon.

Le procédé peut comprendre une étape consistant à exercer, via la vis, une force selon une direction s'étendant le long de la première zone de la cavité.

Le procédé peut comprendre une étape consistant à ménager un concentrateur de contraintes et de déformations dans l'échantillon de sorte à positionner la région donnée de l'échantillon dans laquelle sont générées les contraintes et déformations.

Le procédé peut comprendre :
- une étape consistant à fournir une source de rayons X,
- une étape de détection de rayons X, par au moins un détecteur de rayons X, transmis et/ou diffractés et/ou diffusés à travers la région donnée de l'échantillon dans laquelle sont générées les contraintes et déformations.

Le procédé peut comprendre une étape consistant à fournir un support pour essai mécanique selon l'invention.

Le procédé peut comprendre une étape consistant à fournir un ensemble selon l'invention.

### Description des figures

D'autres avantages et particularités de l'invention apparaîtront à la lecture de la description détaillée de mises en oeuvre et de modes de réalisation nullement limitatifs, et des dessins annexés suivants :
[Fig. 1] la figure 1 est une vue en coupe d'une des deux parties dissociables du support selon l'invention,
[Fig. 2] la figure 2 est une vue éclatée en biais de l'ensemble selon l'invention,
[Fig. 3] la figure 3 est une vue en biais de l'ensemble selon l'invention,
[Fig. 4] les figures 4a et 4b illustrent respectivement une vue en coupe de la vis selon l'invention et une vue de biais de la vis selon l'invention,
[Fig. 5] les figures 5a, 5b et 5c illustrent respectivement une coupe d'une vue de côté de l'élément de transfert selon l'invention, une coupe d'une vue de dessus de l'élément de transfert selon l'invention et une vue de biais de l'élément de transfert selon l'invention.

### Description des modes de réalisation

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

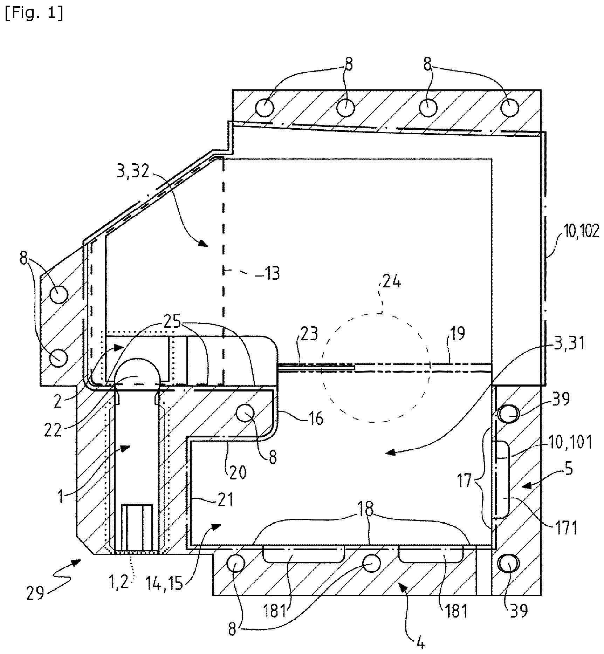

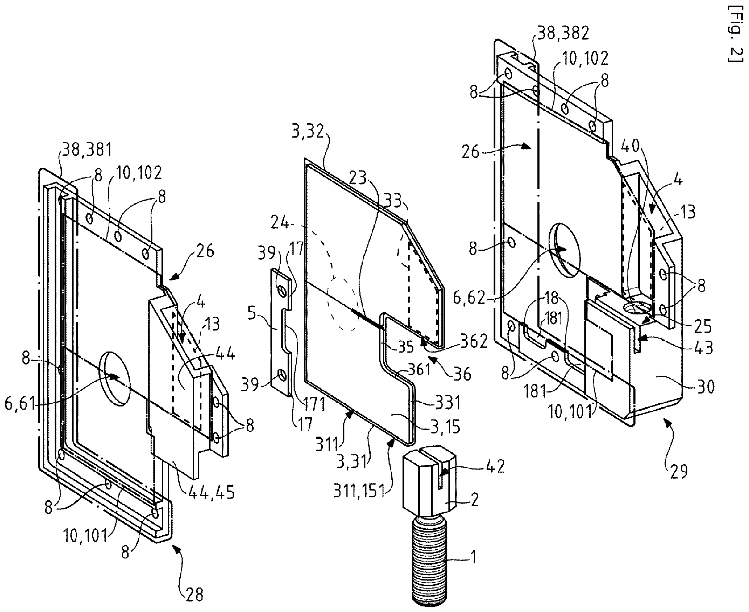

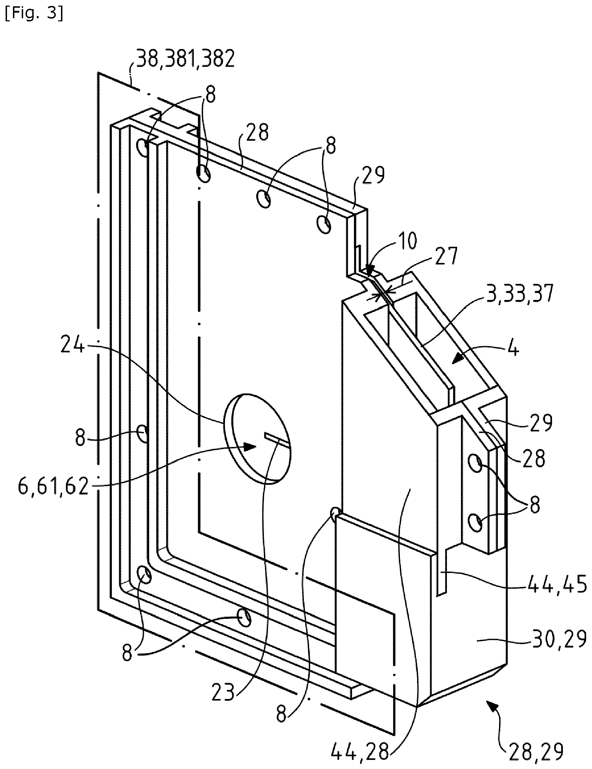

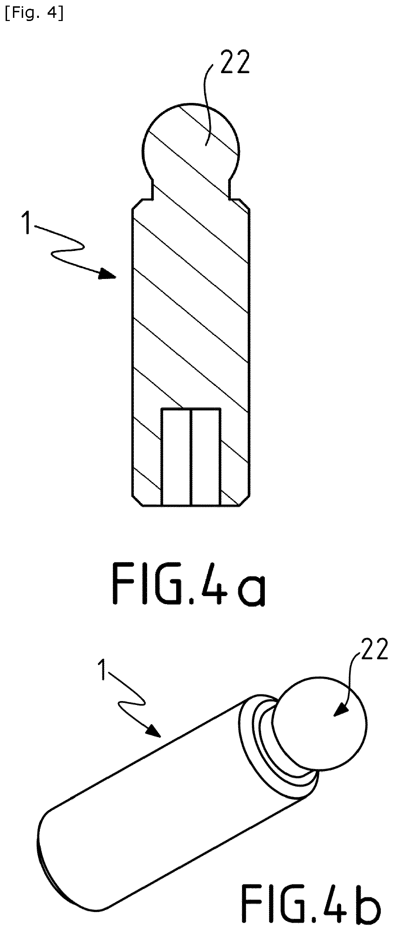

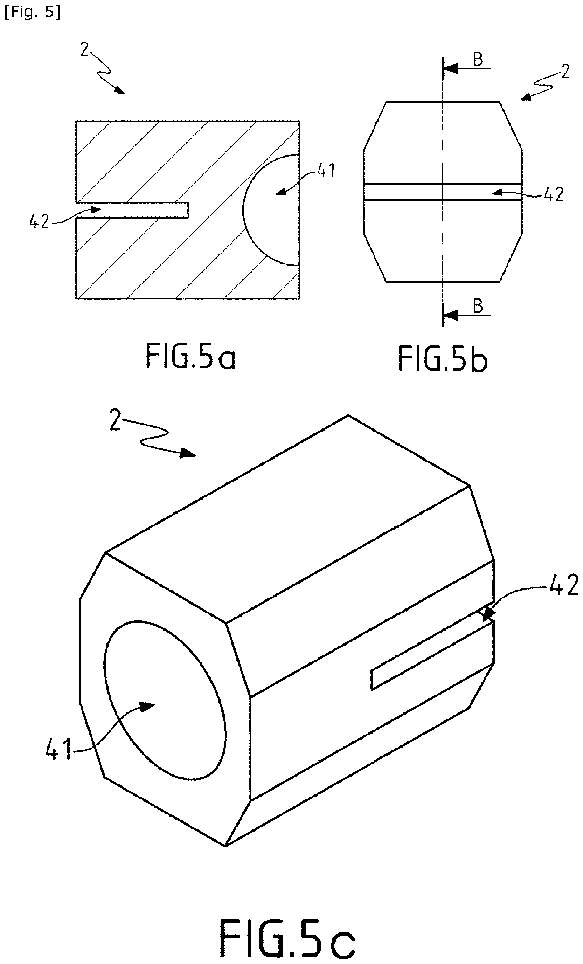

En référence aux FIGURES 1 à 5, il est décrit, dans un premier mode de réalisation, un support pour essais mécaniques comprenant une cavité 10. La cavité 10 comprend une première zone 101 agencée pour accueillir une première portion 31 d'un échantillon 3 complémentaire de la première zone 101 de la cavité 10. La première zone 101 comprend des moyens de maintien 14, 16, 17, 18, 20, 21 de l'échantillon 3. Les moyens de maintien 14, 16, 17, 18, 20, 21 présentent une géométrie complémentaire de la première portion 31 de l'échantillon 3. Le support comprend une deuxième zone 102 agencée pour accueillir une deuxième portion 32 de l'échantillon 3. Les première 101 et deuxième 102 zones de la cavité 10 sont contiguës et agencées pour accueillir les première 31 et deuxième 32 portions de l'échantillon 3 qui est d'un seul tenant. Le support comprend un moyen de chargement mécanique 1, 2 comprenant un élément de transfert 2 agencé pour être mis en mouvement dans la deuxième zone 102 de la cavité 10 de sorte à exercer une force mécanique dans ladite deuxième zone 102 de la cavité 10. L'élément de transfert 2 exerce une force selon une direction s'étendant depuis la première 101 zone de la cavité 10 vers la deuxième 102 zone de la cavité 10. Lorsque l'échantillon 3 est placé dans la cavité 10, l'élément de transfert 2 exerce une force selon une direction s'étendant depuis la première portion 31 vers la deuxième portion 32 de l'échantillon 3. La force mécanique exercée par le moyen de chargement mécanique 1, 2 est supérieure à cent Newtons. En pratique la force exercée est de l'ordre de 500N. Lorsque l'échantillon 3 est placé dans la cavité 10, l'élément de transfert 2 exerce une force mécanique sur la deuxième portion 32 de l'échantillon 3 générant des contraintes et déformations dans une région donnée 24 de l'échantillon 3. Selon le mode de réalisation, comme cela est clairement illustré sur les Figures 1 à 3, l'élément de transfert 2 est agencé pour être mis en mouvement uniquement dans la deuxième zone 102 de la cavité 10.

En pratique le support est agencé pour réaliser des essais de traction et/ou de fissuration et/ou de compression et/ou de flexion sur l'échantillon 3. Ainsi le support selon l'invention permet, lorsqu'un échantillon 3 est inséré dans le support, d'imager, au cours d'essais mécaniques, les modifications de structurales de l'échantillon 3 engendrées par les contraintes mécaniques auxquels l'échantillon 3 est soumis.

Les modifications structurales sont donc suivies in situ. En outre, il est également possible de réaliser des analyses cinématiques et/ou de déterminer des cinétiques d'endommagement de l'échantillon 3.

Le fait que les contraintes et déformations soient générées dans une région donnée 24 permet d'imager un volume restreint de l'échantillon 3 et par conséquent de caractériser les modifications microstructurales de l'échantillon 3 dans ce volume restreint.

La localisation des contraintes et déformations dans une région donnée 24 permet également de reproduire en conditions réelles, c'est-à-dire sur des échantillons usinés et préparés pour être utilisés dans l'application pour laquelle ils sont destinés, les contraintes auxquelles l'échantillon 3 va être soumis en condition d'utilisation. Dès lors, le support présente une taille permettant d'accueillir des échantillons 3 dont les dimensions dans le plan dans lequel s'étend la cavité 10 sont de l'ordre ou supérieure à la dizaine de centimètres.

Le support selon l'invention vise à être disposé sur le trajet d'un faisceau de rayons X. Ce faisceau de rayons X provient d'une source de rayons X qui, selon le cas, peut être celle d'un dispositif d'imagerie, par exemple un laminographe, ou peut être issue d'une ligne de lumière d'un synchrotron.

Selon le premier mode de réalisation, le support comprend deux parties dissociables 28, 29. Chacune des parties dissociables 28, 29 comprend une des deux faces planes 26 du support. Une partie 29 parmi les des deux parties dissociables 28, 29 du support comprend un bloc 30 s'étendant au-delà du plan de la cavité 10 du côté de l'autre partie dissociable 28. Les deux parties dissociables 28, 29 sont agencées pour être dissociées de sorte à permettre le chargement de l'échantillon 3 dans le support.

Les deux surfaces planes 26 du support sont agencées pour empêcher le flambement de l'échantillon 3.

Une partie, dite partie enserrée, de la cavité 10 est constituée des première et deuxième zones 101, 102 de la cavité 10 à l'exception du logement 14 de la première zone 101. La partie enserrée de la cavité 10 du support est comprise entre deux faces planes 26 du support séparées d'une distance constituant, ce qui est défini selon l'invention comme, l'épaisseur 27 de la cavité 10. La cavité 10 présente une forme de fente 10 s'étendant selon un plan. L'échantillon 3 présente une forme de plaque complémentaire de celle de la partie enserrée de la cavité 10. Dans la suite de la description des modes de réalisation, il est entendu par l'épaisseur de la fente 10 ou de la cavité 10, l'épaisseur de la partie de la fente 10 constituant la partie enserrée de la cavité 10. La fente 10 présente une épaisseur 27 légèrement supérieure à celle de l'échantillon 3 de telle sorte que l'échantillon 3 rentre facilement dans la fente et qu'il est empêché de flamber. Un jeu mécanique compris entre 0,1 et 3%, de préférence entre 0,5 et 2%, de préférence encore entre 1 et 2%, de l'épaisseur de la fente 10 est prévue entre la fente 10 et l'échantillon 3. Le ratio entre la dimension de l'échantillon 3 dans le plan selon lequel s'étend la cavité 10 et l'épaisseur de l'échantillon 3 est supérieur ou égale à un facteur 10. A titre d'exemple non limitatif, l'épaisseur 27 de la cavité 10 est inférieure à 1 mm, elle est égale à 700 µm selon le mode de réalisation. Il est requis que l'épaisseur de l'échantillon 3, et par conséquent l'épaisseur de la cavité 10, soit suffisamment petite, typiquement inférieure à 2 mm, de préférence inférieure à 1 mm, pour que les mesures en (nano)laminographie puissent être réalisées sur de nombreux matériaux. Une cavité dont l'épaisseur serait supérieure à 2 mm ne conviendrait pas et ne permettrait pas de réaliser des mesures en (nano)laminographie pour tout type de matériau. L'épaisseur 27 de la cavité 10 est agencée pour être supérieure de quelques micromètres, de préférence de l'ordre de 10 micromètres, à celle de l'échantillon 3. La dimension de l'échantillon 3 dans le plan selon lequel s'étend la cavité 10 est de l'ordre de quelques centimètres à quelques dizaines de centimètres. L'échantillon 3 présente une taille macroscopique et son épaisseur est inférieure aux dimensions de l'échantillon 3 dans le plan selon lequel s'étend la cavité 10. De préférence, l'épaisseur de l'échantillon 3 est inférieure d'au moins un facteur dix aux dimensions de l'échantillon 3 dans le plan selon lequel s'étend la cavité 10.

La faible épaisseur 27 de la cavité 10 selon l'invention contribue à atteindre l'objectif consistant à imager un volume de l'ordre la centaine de nanomètres cube de l'échantillon 3 et par conséquent de caractériser les modifications microstructurales de l'échantillon 3, dans ce de l'ordre la centaine de nanomètres cube, engendrées par les contraintes mécaniques auxquels l'échantillon 3 est soumis.

La cavité 10 selon l'invention, ainsi que les caractéristiques individuelles qui y sont rattachées, contribuent également à atteindre l'objectif consistant à reproduire en conditions réelles les contraintes auxquelles l'échantillon 3 va être soumis en condition d'utilisation et d'imager des échantillons 3 dont les dimensions dans le plan dans lequel s'étend la cavité 10 sont de l'ordre ou supérieure à la dizaine de centimètres.

Selon l'invention, la cavité 10 comprend la partie enserrée et la partie de levier 13 de la deuxième zone 102 de la cavité 10. La partie enserrée de la cavité 10 comprend la première zone 101 de la cavité 10 et une partie, dite partie enserrée, de la deuxième zone 102 de la cavité 10.

Selon l'invention, l'épaisseur de la cavité 10 est définie comme étant l'épaisseur de la partie enserrée.

La deuxième zone comprend également une partie, dite partie non enserrée, comprenant, de préférence est constituée, de la partie de levier 13 de la deuxième zone 102 de la cavité 10. La partie enserrée de la deuxième zone 102 de la cavité 10 comprend donc, de préférence est constituée de, la deuxième zone 102 de la cavité 10 à l'exception de la partie de levier 13 de la deuxième zone 102 de la cavité 10.

L'épaisseur de la partie non enserrée de la cavité 10, c'est-à-dire la partie de levier 13, est supérieure à l'épaisseur de la partie enserrée, c'est-à-dire à l'épaisseur de la cavité 10.

La deuxième zone 102 de la cavité 3 comprend une partie 13 formant levier, dite partie de levier 13, agencée pour que l'élément de transfert 2 exerce une force dans ladite partie de levier 13 de la deuxième zone 102 de la cavité 10. La deuxième portion 32 de l'échantillon 3 comprend un bras de levier 33 complémentaire de la partie de levier 13 de la deuxième zone 102. Lorsque l'échantillon 3 est placé dans la cavité 10, l'élément de transfert 2 exerce une force sur le bras de levier 33 de la deuxième portion 32 de l'échantillon 3.

La partie de levier 13, ainsi que le bras de levier 33, selon l'invention, contribuent à atteindre l'objectif consistant à imager en continu et en temps réel, les modifications structurales de l'échantillon 3 engendrées par les contraintes mécaniques auxquelles l'échantillon 3 est soumis. Les modifications structurales sont donc suivies in situ. En outre, il est également possible de réaliser des analyses cinématiques et/ou de suivre des cinétiques d'endommagement de l'échantillon 3.

Les moyens de maintien 14, 16, 17, 18, 20, 21 du support comprennent un logement 14, agencé pour recevoir une partie saillante 15 de la première portion 31 de l'échantillon 3 qui est complémentaire du logement 14. Le logement 14 est agencé pour recevoir la partie saillante 15 de la première portion 31 de l'échantillon 3. Lorsque l'échantillon 3 est placé dans la cavité 10, les parois définissant le contour de la partie saillante 15 de la première portion 31 de l'échantillon 3 sont portées au contact des parois définissant le contour du logement 14 de la première zone 101 de la cavité 10.

Les moyens de maintien 14, 16, 17, 18, 20, 21 sont agencés pour immobiliser la première portion 31 l'échantillon 3 dans le support. Les moyens de maintien 14, 16, 17, 18, 20, 21 sont agencés pour enchâsser ou enserrer, lorsqu'un échantillon 3 est placé dans la cavité 10, la première portion 31 de l'échantillon 3 de sorte à immobiliser la première portion 31 de l'échantillon 3 dans la première zone 101 de la cavité 10. Plus précisément, les moyens de maintien 14, 16, 17, 18, 20, 21 sont agencés pour immobiliser la première portion 31 de l'échantillon 3 dans la première zone 101 de la cavité 10 du support.

Les moyens de maintien 14, 16, 17, 18, 20, 21 selon l'invention, ainsi que l'ensemble des caractéristiques techniques individuelles qui y sont rattachées, contribuent à atteindre l'objectif consistant à imager in situ, les modifications (nano)structurales de l'échantillon 3 engendrées par les contraintes mécaniques auxquels l'échantillon 3 est soumis. Les modifications (nano)structurales sont donc suivies in situ, i.e. sous charge mécanique. En outre, il est également possible de déterminer la cinématique et/ou des cinétiques d'endommagement de l'échantillon 3.

En référence à la Figure 1, les parois définissant le contour de la deuxième zone 102 de la cavité 10 sont agencées pour ne pas enchâsser ni enserrer l'échantillon 3. Lorsqu'un échantillon 3 est placé dans la cavité 10, une paroi de la deuxième zone 102 de la cavité 10 située en regard de la première zone 101 de la cavité 10 est agencée de sorte qu'un espace ou un débattement sépare ladite paroi de la deuxième zone 102 de la cavité 10 de la paroi de la deuxième portion 32 de l'échantillon 3 qui est située en regard. De préférence, la paroi de la deuxième zone 102 de la cavité 10 située en regard de la première zone 101 de la cavité 10 est également située en regard de la paroi 18, dite première paroi latérale 18, de la première zone 101 de la cavité 3 et en regard d'une paroi 25 de fond du guide 4. De préférence, lorsqu'un échantillon 3 est placé dans la cavité 10, les parois définissant le contour de la deuxième zone 102 de la cavité 10 sont agencées pour ne pas être en contact avec les parois définissant le contour de la deuxième portion 32 de l'échantillon 3.

La génération des contraintes et déformations requiert que la deuxième portion 32 de l'échantillon 3 puisse être déplacée par rapport à la première portion 31 de l'échantillon 3. La deuxième portion 32 de l'échantillon 3 peut être déplacée par rapport à la première portion 31 de l'échantillon 3 selon une direction s'étendant, au moins en partie, depuis la première 101 vers la deuxième 102 zone de la cavité 10. L'espace ou le débattement séparant la paroi de la deuxième portion 32 de l'échantillon 3 de la deuxième zone 102 de la cavité 10 permet, lorsque l'élément de transfert 2 exerce une force sur le bras de levier 33 de la deuxième portion 32 de l'échantillon 3, que la deuxième portion 32 de l'échantillon 3 puisse être déplacée par rapport à la première portion 31 d'un échantillon 3 de sorte que les contraintes et déformations soient générées.

La première zone 101 de la cavité 10 comprend un épaulement 16 qui est contigu au logement 14 de la cavité 10 et qui s'étend depuis la première zone 101 vers la deuxième zone 102 de la cavité 10. L'épaulement 16 s'étend depuis le logement 14 vers la deuxième zone 102 du support. L'épaulement 16 est agencé pour être portée en contact direct avec la première portion 31 de l'échantillon 3. L'épaulement 16 est agencé pour être porté en contact direct avec une paroi de fond 35 d'un logement 36 de l'échantillon 3. L'épaulement 16 est en contact avec seulement une partie de la paroi de fond 35 du logement 36 de l'échantillon 3 située du côté de la première portion 31 de l'échantillon 3. Une partie de l'échantillon 3, dite partie saillante 37, est en saillie par rapport au plan dans lequel est compris la paroi de fond 35 d'un logement 36 de l'échantillon 3 du côté du moyen de chargement mécanique 1, 2. La partie saillante 37 de la deuxième portion 32 de l'échantillon 3 comprend le bras de levier 33 de la deuxième portion 32 de l'échantillon 3.

La première zone 101 de la cavité 10 comprend une paroi 17, dite de maintien, située en regard de l'épaulement 16. La paroi de maintien 17 est agencée pour être en contact direct avec l'échantillon 3 et pour maintenir la partie saillante 15 de la première portion 31 de l'échantillon 3 dans le logement 14 du support. La paroi de maintien 17 est également agencée pour maintenir l'épaulement 16 en contact direct avec la première portion 31 de l'échantillon 3. En particulier, la paroi de maintien 17 est également agencée pour maintenir l'épaulement 16 en contact direct avec la paroi de fond 35 du logement 36 de l'échantillon 3. La paroi de maintien 17 est également agencée pour maintenir le logement 14 du support en contact direct avec la première portion 31 de l'échantillon 3. En particulier, la paroi de maintien 17 est agencée pour maintenir la partie saillante 37 de la deuxième portion 32 de l'échantillon 3 dans la partie de levier 13 de la deuxième zone 102 de la cavité 10.

Selon le premier mode de réalisation, la paroi de maintien 17 est une paroi d'une entretoise 5 agencée pour être fixée au support. L'entretoise 5 est agencée pour être fixée au reste du support, en particulier à une des, et/ou aux, parties dissociables 28, 29 du support. L'entretoise 5 comprend un évidement. L'entretoise 5 est amovible et agencée pour être retirée du support. Lorsque l'entretoise 5 est retirée du support, l'échantillon 3 peut être inséré dans la cavité 10 par l'ouverture ainsi formée. Lorsque l'entretoise 5 est fixée au support, elle est agencée pour empêcher le retrait ou l'insertion de l'échantillon 3 dans la fente 10. Dans ce cas, l'échantillon 3 peut être chargé dans le support en dissociant les des deux parties dissociables 28, 29 du support et/ou en retirant l'entretoise 5 du support.

L'entretoise 5 comprend des ouvertures oblongues 39 agencées pour moduler la position de fixation de l'entretoise 5 sur le reste du support en translatant cette dernière selon une direction s'étendant le long d'une séparation entre la première zone 101 de la cavité 10 et la deuxième zone 102 de la cavité 10. Les ouvertures oblongues 39 de l'entretoise 5 sont agencées pour permettre une translation de l'entretoise 5 selon une direction selon laquelle s'étend la partie saillante 15 de la première portion 31 de l'échantillon 3.

Le support comprend une paroi 18 de la première zone 101 de la cavité 10 s'étendant depuis le logement 14 de la première zone 101 de la cavité 10 jusqu'à la paroi de maintien 17.

Le support comprend une ouverture 19 s'étendant depuis l'épaulement 16 jusqu'à la paroi de maintien 17 et reliant les première 101 et deuxième 102 zones de la cavité 10.

Le logement 14 de la première zone 101 de la cavité 3 comprend la paroi 18, dite première paroi latérale 18, s'étendant selon une direction reliant le logement 14 à la paroi de maintien 17. Le logement 14 comprend également une deuxième paroi latérale 20 située en regard de la première paroi latérale 18 du support. Le logement 14 comprend également une paroi de fond 21 du logement 14 de la première zone 101 reliant les première 18 et deuxième 20 parois latérales du logement 14 du support. La paroi de fond 21 du logement 14 de la première zone 101 et les première 18 et deuxième 20 parois latérales du logement 14 du support sont agencées de sorte à présenter une forme en U. Par conséquent, le logement 14 présente une forme en U.

La première paroi latérale 18 du logement 14 est en contact direct avec une paroi extérieure 151 de la partie saillante 15 de la première portion 31 l'échantillon 3. La deuxième paroi latérale 20 du logement 14 est en contact direct avec une première paroi 361 de la partie saillante 15 de l'échantillon 3 située du côté de la deuxième portion 32 de l'échantillon 3. La première paroi latérale 18 du logement 14 du support s'étend le long d'une paroi extérieure 311 de la première portion 31 de l'échantillon 3 comprenant la paroi extérieure 151 de la partie saillante 15 de l'échantillon 3. La deuxième paroi latérale 20 du logement 14 du support s'étend selon une direction reliant le logement 14 du support à la paroi de maintien 17. Les première 18 et deuxième 20 parois latérales du logement 14 du support s'étendent selon une direction perpendiculaire à une direction reliant la première zone 101 du support à la deuxième zone 102 du support. Les première 18 et la deuxième 20 parois latérales du logement 14 du support s'étendent selon une direction perpendiculaire à une direction reliant la première portion 31 de l'échantillon 3 à la deuxième portion 32 de l'échantillon 3.

La première paroi latérale 18 du logement 14 du support s'étend au-delà d'un plan selon lequel s'étend l'épaulement 16 de la première zone 101 de la cavité 10. La première paroi latérale 18 du logement 14 du support s'étend au-delà d'un plan selon lequel s'étend la paroi de fond 35 du logement 36 de l'échantillon 3 selon la direction reliant le logement 14 du support à la paroi de maintien 17. La première paroi latérale 18 du logement 14 du support comprend des évidements 181.

La paroi de fond 21 du logement 14 du support et les première 18 et deuxième 20 parois latérales du logement 14 du support sont en contact direct avec la partie saillante 15 de la première portion 31 de l'échantillon 3. La paroi de fond 21 du logement 14 du support est agencée pour être en contact direct avec une face d'extrémité 331 de la partie saillante 15 de la première portion 31 de l'échantillon 3.

La forme de la première zone 101 de la cavité 10 correspond à la forme de la première portion 31 de l'échantillon 3. La forme de la première zone 101 de la cavité 10 correspond à la forme de la première portion 31 de l'échantillon 3 de telle sorte que les moyens de maintien 14, 16, 17, 18, 20, 21 de l'échantillon 3 immobilisent la première portion 31 de l'échantillon 3 dans la première zone 101 de la cavité 10. Les moyens de maintien 14, 16, 17, 18, 20, 21 de l'échantillon 3 sont en contact direct avec la première portion 31 de l'échantillon 3 en regard des parois des moyens de maintien 14, 16, 17, 18, 20, 21 de l'échantillon 3. De préférence, les moyens de maintien 14, 16, 17, 18, 20, 21 de l'échantillon 3 sont en contact direct avec au moins une partie des parois, de préférence avec chacune des parois, de la première portion 31 de l'échantillon 3 en regard des parois des moyens de maintien 14, 16, 17, 18, 20, 21 de l'échantillon 3. La forme de la première zone 101 de la cavité 10 correspond à la forme de la première portion 31 de l'échantillon 3 et les moyens de maintien 14, 16, 17, 18, 20, 21 de l'échantillon 3 sont en contact direct avec la première portion 31 de l'échantillon 3 en regard des parois des moyens de maintien 14, 16, 17, 18, 20, 21 de l'échantillon 3 de sorte que les moyens de maintien 14, 16, 17, 18, 20, 21 de l'échantillon 3 immobilisent la première portion 31 de l'échantillon 3 dans la première zone 101 de la cavité 10.

L'épaulement 16 s'étend depuis la deuxième paroi latérale 20 du logement 14 du support en direction de la deuxième portion 32 de l'échantillon 3. L'épaulement 16 s'étend depuis la deuxième paroi latérale 20 du logement 14 du support selon une direction reliant la première paroi latérale 18 du logement 14 du support à la deuxième paroi latérale 20 du logement 14 du support.

Les ouvertures oblongues 39 sont agencées pour permettre une translation de l'entretoise 5 selon une direction selon laquelle s'étendent les première 18 et deuxième parois 20 latérales du logement 14 du support.

Le moyen de chargement mécanique 1, 2 est agencé pour convertir un mouvement de rotation en un mouvement de translation selon la direction s'étendant depuis la première 101 vers la deuxième 102 zone de la cavité 3. Le moyen de chargement mécanique 1, 2 comprend une vis 1 agencée pour être mise en rotation dans le support. L'élément de transfert 2 est agencé pour coopérer avec une tête 22 de la vis 1 de sorte à, lorsqu'un échantillon 3 est placé dans la cavité 10, transférer la force exercée lors de la rotation de la vis 1 depuis la tête 22 de la vis 1 vers la deuxième portion 32 de l'échantillon 3. Plus précisément, la force exercée lors de la rotation de la vis 1 est transférée depuis la tête 22 de la vis 1 vers le bras de levier 33 de la deuxième portion 32 de l'échantillon 3. Tel qu'illustré sur la Figure 1, la tête 22 de la vis 1 est en contact direct avec l'élément de transfert 2. L'élément de transfert 2 est en contact direct avec l'échantillon 3, en particulier avec la deuxième portion 32 de l'échantillon 3. La force exercée par la vis 1 sur l'élément de transfert 2 est appliquée dans une direction s'étendant depuis la première paroi latérale 18 du logement 14 du support vers la deuxième paroi latérale 20 du logement 14 du support. La force exercée par la vis 1 sur l'élément de transfert 2 est appliquée dans une direction s'étendant depuis la première portion 31 de l'échantillon 3 vers la deuxième portion 32 de l'échantillon 3. L'élément de transfert 2 est agencé pour transférer la force exercée par la vis 1 sur une partie d'une deuxième paroi latérale 362 du logement 36 de l'échantillon 3. La deuxième paroi latérale 362 du logement 36 de l'échantillon 3 constitue également la paroi inférieure de partie saillante 37 de la deuxième portion 32 de l'échantillon 3.

Le moyen de chargement mécanique 1, 2 selon l'invention, contribue à atteindre l'objectif consistant à imager les modifications (nano)structurales de l'échantillon 3 engendrées par les contraintes mécaniques auxquels l'échantillon 3 est soumis. Les modifications (nano)structurales sont donc suivies in situ et dans le volume. En outre, il est également possible de déterminer la cinématique et/ou des cinétiques d'endommagement de l'échantillon 3.

La deuxième zone 102 de la cavité comprend un guide 4 agencé pour contraindre l'élément de transfert 2 à se déplacer le long dudit guide 4 selon un mouvement de translation dans le plan selon lequel s'étend la cavité 10. L'élément de transfert 2 est en saillie par rapport à une paroi 25 de fond du guide 4. La limite de séparation entre la première 31 et la deuxième portion 32 de l'échantillon 3 est située du côté de la deuxième zone 102 de la cavité 10 par rapport au plan dans lequel la paroi 25 de fond de guide 4 est comprise.

Un trou taraudé 40 est ménagé dans le bloc 30. Le trou 40 est agencé pour coopérer avec un filetage de la vis 1. L'axe de révolution du trou taraudé 40 est agencé de sorte à être compris dans le plan selon lequel s'étend la fente 10. L'axe de révolution du trou taraudé 40 est agencé de sorte à être compris dans le plan situé à équidistance des deux faces planes 26 du support et parallèle aux deux faces planes 26 du support. L'axe de révolution du trou taraudé 40 est agencé de sorte à être compris dans le plan médian de l'échantillon 10, ledit plan médian s'étendant selon la direction reliant les première 31 et deuxième 32 portions de l'échantillon 3.

La vis 1 est mise en mouvement dans une direction comprise dans le plan de la fente 10. La vis 1 est mise en mouvement dans une direction s'étendant depuis la première zone 101 du support vers la deuxième zone 102 du support. La vis 1 est mise en mouvement dans une seule direction s'étendant depuis la première zone 31 du support vers la deuxième zone 32 du support. La vis 1 est agencée pour exercer une force selon une direction s'étendant le long de la première zone 101 de la cavité 10.

Le moyen de chargement mécanique 1, 2 est agencé pour que la vis 1 se déplace, et s'étende, selon un axe longeant la paroi de fond 21 du logement 14 de la cavité 10. La deuxième zone 102 de la cavité 10 est agencée pour, de préférence présente une forme telle que, l'axe selon lequel se déplace la vis 1 coupe la partie de levier 13. La deuxième zone 102 de la cavité 10 est agencée pour, de préférence présente une forme telle que, l'axe selon lequel se déplace la vis 1 coupe la paroi 25 de fond du guide 4. La première zone 101 et la deuxième zone 102 de la cavité 10 sont agencées relativement l'une à l'autre pour que l'axe selon lequel se déplace la vis 1 longe la paroi de fond 21 du logement 14 de la cavité 10 et coupe la partie de levier 13. De préférence, la première zone 101 et la deuxième zone 102 de la cavité 10 présentent chacune une forme, de préférence encore une forme différente l'une de l'autre, telle que, l'axe selon lequel se déplace la vis 1 longe la paroi de fond 21 du logement 14 de la cavité 10 et coupe la partie de levier 13.

La jonction entre la vis 1 et l'élément de transfert 2 est de type rotule.

La tête 22 de la vis 1 est courbe et convexe et coopère avec une partie 41 courbe et concave de l'élément de transfert 2.

La tête 22 de la vis 1 est de forme sphérique et s'articule dans un évidement sphérique 41, complémentaire de la tête sphérique 22, de l'élément de transfert 2. La tête 22 de la vis 1 peut être mise en mouvement dans le trou taraudé 40 et dans le guide 4.

L'élément de transfert 2 comprend une rainure 42 agencée pour qu'une partie de la deuxième portion 32 de l'échantillon 3 y soit insérée.

Lorsque l'élément de transfert 2 est inséré dans le guide 4, la rainure 42 de l'élément de transfert 2 s'étend selon le plan de la fente 10.

La rainure 42 de l'élément de transfert 2 est agencée pour que l'échantillon 3 y soit inséré sur sa tranche.

En particulier, la rainure 42 de l'élément de transfert 2 est agencée pour que la deuxième paroi latérale 362 du logement 36 de l'échantillon 3 y soit insérée.

La première paroi latérale 361 du logement 36 de l'échantillon 3 est en contact direct avec la deuxième paroi latérale 20 du logement 14 du support. La paroi de fond 35 du logement 36 de l'échantillon 3 relie les première 361 et deuxième 362 parois latérales du logement 36 de l'échantillon 3. La première paroi latérale 361 du logement 36 de l'échantillon 3 s'étend selon une direction reliant l'épaulement 16 du support à la paroi de fond 21 du logement 14 du support. Selon le premier mode de réalisation, la deuxième paroi latérale 362 du logement 36 de l'échantillon 3 est parallèle à la première paroi latérale 361 du logement 36 de l'échantillon 3. La deuxième paroi latérale 362 du logement 36 de l'échantillon 3 s'étend au-delà d'un plan comprenant la paroi de fond 21 du logement 14 du support selon la direction reliant l'épaulement 16 du support à la paroi de fond 21 du logement 14 du support.

La partie de levier 13 de la deuxième zone 102 de la cavité 10 est en saillie par rapport au plan comprenant la paroi de fond 21 du logement 14 de la première zone 101 de la cavité 10 selon une direction reliant la paroi de maintien 17 au logement 14. La partie de levier 13 est comprise dans le guide 4 de la cavité 10. La partie de levier 13 s'étend le long d'un plan médian du guide 4 s'étendant selon la direction reliant les première 101 et deuxième 102 zones de la cavité 10.

Selon le premier mode de réalisation, la partie dissociable 28 et la partie dissociable 29 forment chacune une partie du guide. Le bloc 30 de la partie dissociable 29 comprend une encoche 43 située au-delà du plan dans lequel s'étend la fente 10 selon la direction s'étendant depuis la partie dissociable 29 du support vers l'autre partie dissociable 28 du support. L'encoche 43 est agencée pour coopérer avec un prolongement 45 d'une paroi 44, dite verticale, du guide 4 de la partie dissociable 28. La paroi verticale 44 du guide 4 s'étend selon un plan parallèle au plan selon lequel s'étendent les première 101 et deuxième zone 102 de la cavité 10.

Lorsque les deux parties dissociables 28, 29 sont assemblées pour former le support, le prolongement 45 de la paroi 44 est inséré dans l'encoche 43. Un ensemble de trous traversants 8 sont ménagés le long de la bordure du support située au niveau de la première paroi latérale 18 et au niveau de la bordure du support située au niveau de la paroi de maintien 17. Les trous traversants 8 ménagés le long de la bordure du support située au niveau de la paroi de maintien 17 s'étendent au-delà de la paroi de maintien 17 du côté de la deuxième zone 102 de la cavité 10 jusqu'à une extrémité du support. Des trous traversants 8 sont également ménagés le long de la bordure de la deuxième zone 102 du support, la bordure de la deuxième zone 102 du support étant située du côté opposé du support par rapport à la bordure du support située au niveau de la première paroi latérale 18.

Selon le premier mode de réalisation, le support comprend une ouverture traversante 6. L'ouverture 6 est agencée de sorte que la région donnée 24 de l'échantillon 3 dans laquelle sont générées les contraintes et déformations se trouve dans l'ouverture 6. En pratique, chacune des deux faces planes 26 du support comporte un évidement 61, 62. Les évidements 61, 62 des faces planes 26 du support forment l'ouverture 6 du support.

Selon le premier mode de réalisation, pour contrer le moment de flexion engendré lors du chargement de l'échantillon 3, la section du support est augmentée dans certaines parties du support. Aussi, selon le premier mode de réalisation, le support comprend un raidisseur 38 agencé pour augmenter la résistance du support au flambement. Le raidisseur 18 s'étendant le long d'une bordure du support située au niveau de la première paroi latérale 18 et au niveau d'une bordure du support située au niveau de la paroi de maintien 17. Le raidisseur 18 s'étendant au niveau de la bordure la paroi de maintien 17 s'étend au-delà de la paroi de maintien 17 du côté de la deuxième zone 102 de la cavité 10 jusqu'à une extrémité du support. Le raidisseur 18 vise à empêcher le flambement du support lorsque le moyen de chargement mécanique 1, 2 exerce une force sur l'échantillon 3. Afin de limiter l'augmentation de la masse du support engendrée par l'augmentation de la section support, le raidisseur 38 est agencé sous forme de profilé en forme de U 38. Le raidisseur 38 est ménagé au niveau des parties du support situées au niveau de la première paroi latérale 18 et au niveau de la bordure du support située au niveau de la paroi de maintien 17. En pratique, un semi-profilé en forme de U 381, 382 est ménagé sur chacune des faces extérieures des deux parties dissociables 28, 29 du support. Lorsque les deux parties dissociables 28, 29 du support sont associées, les deux semi-profilés en forme de U 381, 382 constituent le profilé en forme de U 38.

Dans un second mode de réalisation, il est proposé un ensemble comprenant le support selon le premier mode de réalisation et un échantillon 3. L'échantillon 3 est placé dans le support. L'ensemble comprend un concentrateur de contraintes et de déformations 23 ménagé dans l'échantillon 3 de sorte à positionner la région donnée 24 de l'échantillon 3 dans laquelle sont générées les contraintes et déformations. En pratique, la position de la région donnée 24 de l'échantillon 3 dans laquelle sont générées les contraintes et déformations sera déterminée par le type, la forme, la taille et la position du concentrateur de contraintes et de déformations 23 sur l'échantillon 3. Selon l'invention, le concentrateur de contraintes et de déformations 23 est de préférence située sur ou à proximité de la séparation entre la première 31 et la deuxième portion 32 de l'échantillon 3. A titre d'exemple non limitatif, selon le second mode de réalisation, le concentrateur de contraintes et de déformations 23 est une fente 23. Lorsque le concentrateur de contraintes et de déformations 23 est une fente 23, la fente 23 s'étend selon la direction s'étendant depuis la paroi de fond 21 du logement 14 de la première zone 101 de la cavité 10 du support vers l'épaulement 16 de la première zone 101 de la cavité 10 du support.

Le concentrateur de contraintes et de déformations 23 selon l'invention contribue à atteindre l'objectif consistant à imager un volume avec une résolution de l'ordre la centaine de nanomètres de l'échantillon 3 et par conséquent de caractériser les modifications (nano)structurales de l'échantillon 3, dans ce de l'ordre la centaine de nanomètres cubes, engendrées par les contraintes et déformations mécaniques auxquels l'échantillon 3 est soumis.

Le concentrateur de contraintes et de déformations 23 selon l'invention contribue également à atteindre l'objectif consistant à reproduire en conditions réelles les contraintes auxquelles l'échantillon 3 va être soumis en condition d'utilisation et d'imager des échantillons 3 dont les dimensions dans le plan dans lequel s'étend la cavité 10 sont de l'ordre ou supérieure à la dizaine de centimètres.

Dans un troisième mode de réalisation, il est proposé un dispositif d'imagerie par rayons X comprenant un support pour essais mécaniques selon le premier mode de réalisation, une source de rayons X et au moins un détecteur agencé pour détecter des rayons X transmis et/ou diffractés et/ou diffusés à travers la région donnée 24 de l'échantillon 3 dans laquelle sont générées les contraintes et déformations. A titre d'exemple non limitatif, la source de rayons X est issue d'une ligne de lumière d'un synchrotron et le détecteur est composé d'un scintillateur couplé à une caméra. A titre d'exemple non limitatif, la source peut être un tube à rayons X et le détecteur peut être un diffractomètre. A titre d'exemple non limitatif, le dispositif d'imagerie est agencé pour réaliser des mesures de laminographie et en particulier de (nano)laminographie. Les mesures en (nano)laminographie requièrent de positionner et déplacer l'échantillon 3 avec une précision de l'ordre de la centaine de micromètres, de préférence de l'ordre de la dizaine de micromètres, de préférence encore de l'ordre du micromètre et de manière davantage préférée de l'ordre de la centaine de nanomètres. Dès lors, une masse de l'ensemble support/échantillon 3 supérieure à la centaine de grammes interdit l'utilisation de l'ensemble support/échantillon 3 en (nano)laminographie car les moteurs permettant d'atteindre de telles précisions et de tels pas de déplacement ne sont aptes à déplacer que de faibles masses, typiquement inférieures à 100 grammes.

Le dispositif d'imagerie par rayon X comprend des moyens de mise en mouvement du support agencés pour déplacer le support selon un mouvement de translation dans un plan parallèle à un plan comprenant la fente 10 du support, dit plan normal, et/ou pour incliner le support par rapport au plan normal. Les moyens de mise en mouvement du support sont agencés pour translater le support d'une distance inférieure à 2mm, de préférence à 0,5mm, et/ou pour incliner le support d'un angle inférieur à 90°, de préférence à 25°.

De préférence, pour pouvoir sonder à des résolutions nanométriques en une zone localisée de l'échantillon 3, les moyens de mise en mouvement du support sont des moteurs piézo-électriques. Le pas des moteurs piézo-électriques est inférieur à 1 µm.

Les moteurs piézo-électriques susceptibles d'être utilisés en combinaison avec le dispositif selon l'invention, c'est-à-dire un dispositif comprenant le support selon l'invention, permettent d'ajuster la position de la région dans laquelle se produisent les modifications (nano)structurales de l'échantillon 3 engendrées par les contraintes mécaniques auxquels l'échantillon 3 par rapport au faisceau de rayons X. Les modifications (nano)structurales sont donc suivies in situ dans le volume et à plusieurs échelles. En outre, il est également possible de déterminer la cinématique et/ou des cinétiques d'endommagement de l'échantillon 3.

Les moteurs piézo-électriques du dispositif selon l'invention, c'est-à-dire un dispositif comprenant le support selon l'invention, contribuent à atteindre l'objectif consistant à atteindre l'objectif consistant à reproduire en conditions réelles les contraintes auxquelles l'échantillon 3 va être soumis en condition d'utilisation et d'imager des échantillons 3 dont les dimensions dans le plan dans lequel s'étend la cavité 10 sont de l'ordre ou supérieure à la dizaine de centimètres.

Les moteurs piézo-électriques susceptibles d'être utilisés en combinaison avec le dispositif selon l'invention, c'est-à-dire un dispositif comprenant le support selon l'invention, contribuent à atteindre l'objectif consistant à imager un volume à une résolution de l'ordre la centaine de nanomètres cube de l'échantillon 3 et par conséquent de caractériser les modifications (nano)structurales de l'échantillon 3, à des résolutions de l'ordre la centaine de nanomètres cube, engendrées par les contraintes mécaniques auxquelles l'échantillon 3 est soumis.

Toutefois, pour assurer une reproductibilité du déplacement de l'échantillon 3 par les moteurs piézo-électriques inférieure à 1 µm, il est préférable que l'ensemble support/échantillon 3 présente une masse inférieure à 50 grammes. Le support selon l'invention, qui régit l'agencement ainsi que les caractéristiques géométriques de l'échantillon 3, permet d'atteindre une masse inférieure à 50 grammes. En particulier, mais non uniquement, l'épaisseur 27 du support, la cavité 10 du support, le logement 14 du support et la partie de levier 13 contribuent à atteindre une masse de l'ensemble support/échantillon 3 qui est inférieure à 50 grammes.

Cependant, la faible masse du support implique une réduction des épaisseurs des différents éléments du support et en particulier de celle des deux faces planes 26 du support. Cette réduction induit l'apparition du flambement du support lors des essais mécaniques. Le flambement de la partie de l'échantillon qui est en compression est empêché par les raidisseurs 38 décrits précédemment.

Dans un quatrième mode de réalisation, il est proposé un dispositif d'imagerie par rayon X comprenant un ensemble selon le second mode de réalisation, une source de rayons X et au moins un détecteur agencé pour détecter des rayons X transmis et/ou diffractés et/ou diffusés à travers la région donnée 24 de l'échantillon 3 dans laquelle sont générées les contraintes et déformations. A titre d'exemple non limitatif, la source de rayons X est issue d'une ligne de lumière d'un synchrotron et le détecteur est composé d'un scintillateur couplé à une caméra. A titre d'exemple non limitatif, la source peut être un tube à rayons X et le détecteur peut être un scintillateur couplé à une caméra. A titre d'exemple non limitatif, le dispositif d'imagerie est agencé pour réaliser des mesures de laminographie.

L'ensemble des caractéristiques et avantages du dispositif selon le troisième mode de réalisation son transposables au dispositif selon le quatrième mode de réalisation.

Dans un cinquième mode de réalisation, il est proposé un procédé d'analyse par rayons X de l'échantillon 3 comprenant l'étape consistant à fournir un support pour essais mécaniques selon le premier mode de réalisation dans un dispositif d'imagerie par rayons X.

Le procédé d'analyse par rayons X de l'échantillon 3 comprend l'étape consistant à imager, au moyen du dispositif d'imagerie par rayons X, l'échantillon 3. De préférence, le dispositif d'imagerie par rayons X est un dispositif d'analyse par laminographie. Un volume d'échantillon compris entre (100 x 100 x 100) et (480 x 480 x 480) µm³ est imagé.

Le procédé d'analyse par rayons X de l'échantillon 3 comprend l'étape consistant à appliquer une charge mécanique, au moyen du support pour essais mécaniques selon le premier mode de réalisation, à l'échantillon 3. De préférence, l'étape d'application de la charge mécanique est réalisée in situ. Selon l'invention, l'étape d'application de la charge mécanique est réalisée sans retirer, ni déplacer l'échantillon du support.

En référence aux Figures 1 à 5, dans un sixième mode de réalisation, il est proposé un procédé pour l'analyse par rayons X d'un échantillon 3 sous chargements mécaniques. Le procédé comprend l'étape consistant à ménager une cavité 10 dans un support de l'échantillon 3. Le support comprend une première zone 101, agencée pour accueillir une première portion 31 de l'échantillon 3 complémentaire de la première zone 101 de la cavité 10. La première zone 101 de la cavité 10 comprend des moyens de maintien 14, 16, 17, 18, 20, 21 de l'échantillon 3. Le support comprend également une deuxième zone 102 agencée pour accueillir une deuxième portion 32 de l'échantillon 3. Les première 101 et deuxième 102 zones de la cavité 10 sont contiguës et agencées pour accueillir les première 31 et deuxième 32 portions de l'échantillon 3 d'un seul tenant. Le procédé comprend également l'étape consistant à exercer une force mécanique générant des contraintes et déformations dans une région donnée 24 de l'échantillon 3 par l'intermédiaire d'un moyen 1, 2, dit de chargement mécanique, comprenant un élément de transfert 2 agencé pour être mis en mouvement dans la deuxième zone 102 de la cavité 10.

Le procédé comprend l'étape consistant à exercer une force, au moyen de l'élément de transfert 2, selon une direction s'étendant depuis la première zone 101 de la cavité 10 vers la deuxième zone 102 de la cavité 10. Le procédé comprend l'étape consistant à convertir, via le moyen de chargement mécanique 1, 2, un mouvement de rotation en un mouvement de translation selon la direction s'étendant depuis la première zone 101 de la cavité 10 vers la deuxième zone 102 de la cavité 10.

Le procédé comprend l'étape consistant à fournir la partie 13 formant levier, dite partie de levier 13, à la deuxième zone 102 de la cavité 10 de sorte que l'élément de transfert 2 exerce une force dans ladite partie de levier 13 de la deuxième zone 102 de la cavité 10. La partie de levier 13 est en saillie par rapport au plan comprenant la paroi de fond 21 du logement 14 de la première zone 101 de la cavité 10 selon la direction reliant la paroi de maintien 17 au logement 14.

Le procédé comprend l'étape consistant à fournir le guide 4 à la cavité 3 de sorte à contraindre l'élément de transfert 2 à se déplacer le long du guide 4 selon un mouvement de translation dans le plan dans lequel s'étend la cavité 10.

Lorsqu'un échantillon 3 est placé dans la cavité 10, le procédé comprend l'étape consistant à enchâsser ou enserrer, dans les moyens de maintien 14, 16, 17, 18, 20, 21 du support, la première portion 31 de l'échantillon 3 de sorte à immobiliser la première portion 31 de l'échantillon 3 dans la première zone 101 de la cavité 10. Le procédé comprend l'étape consistant à fournir un logement 14 aux moyens de maintien 14, 16, 17, 18, 20, 21 du support de sorte à enchâsser ou enserrer la première portion 31 de l'échantillon 3 dans les moyens de maintien 14, 16, 17, 18, 20, 21 du support de sorte à immobiliser la première portion 31 de l'échantillon 3 dans la première zone 101 de la cavité 10.

Selon le sixième mode de réalisation, la partie saillante 15 de la première portion 31 de l'échantillon 3 est complémentaire du logement 14.

Le procédé comprend l'étape consistant à fournir l'épaulement 16 à la première zone 101 de la cavité 10, l'épaulement 16 étant contigu au logement 14 de la cavité 10 et s'étendant depuis la première zone 101 vers la deuxième zone 102 de la cavité 10. Le procédé comprend l'étape consistant à fournir une paroi 17, dite de maintien, à la première zone 101 de la cavité 10. La paroi de maintien 17 étant située en regard de l'épaulement 16.

Le procédé comprend l'étape consistant à fournir l'ouverture 19 au support. L'ouverture 19 s'étendant depuis l'épaulement 16 jusqu'à la paroi de maintien 17 et relie les première 101 et deuxième 102 zones de la cavité 10.

Le procédé comprend l'étape consistant à fournir la première paroi latérale 18 au logement 14 de la première zone 101 de la cavité 10. La première paroi latérale 18 s'étend selon une direction reliant le logement 14 à la paroi de maintien 17. Le procédé comprend l'étape consistant à fournir la deuxième paroi latérale 20 au logement 14 de la première zone 101 de la cavité 10. La deuxième paroi latérale 20 est située en regard de la première paroi latérale 18 du support. Le procédé comprend l'étape consistant à fournir la paroi de fond 21 du logement 14 de la première zone 101 de la cavité 10. La paroi de fond 21 du logement 14 relie les première 101 et deuxième 102 parois latérales du logement 14 du support. La paroi de fond 21 du logement 14 de la première zone 101 de la cavité 10 et les première 18 et deuxième 20 parois latérales du logement 14 du support présentant une forme en U.

Le procédé comprend l'étape consistant à fournir un raidisseur 38 au support de sorte à augmenter une résistance du support au flambement. Le raidisseur 38 s'étendant le long d'une bordure du support située au niveau de la première paroi latérale 18 de la cavité et s'étend le long d'une bordure du support située au niveau de la paroi de maintien 17. Le raidisseur 18 s'étendant au niveau de la bordure la paroi de maintien 17 s'étend au-delà de la paroi de maintien 17 du côté de la deuxième zone 102 de la cavité 10 jusqu'à une extrémité du support.

Le procédé comprend l'étape consistant à fournir la vis 1 au moyen de chargement mécanique 1, 2. La vis 1 est mise en rotation dans le support de sorte que l'élément de transfert 2 coopère avec la tête 22 de la vis 1 de sorte à, lorsqu'un échantillon 3 est placé dans la cavité 10, transférer la force exercée lors de la rotation de la vis 1 depuis la tête 22 de la vis 1 vers la deuxième portion 32 de l'échantillon 3.

Le procédé comprend l'étape consistant à exercer, via la vis 1, une force selon une direction s'étendant le long de la première zone 101 de la cavité 10.

Le procédé comprend l'étape consistant à ménager un concentrateur de contraintes et de déformations 23 dans l'échantillon 3 de sorte à positionner la région donnée 24 de l'échantillon 3 dans laquelle sont générées les contraintes et déformations les plus grandes.

Selon un septième mode de réalisation, le procédé comprend les étapes consistant à fournir une source de rayons X et à détecter, par au moins un détecteur de rayons X, des rayons X transmis et/ou diffractés et/ou diffusés à travers la région donnée 24 de l'échantillon 3 dans laquelle sont générées les contraintes et déformations.

Selon une première variante, le procédé selon le septième mode de réalisation comprend l'étape consistant à fournir un support pour essai mécanique selon le premier aspect de l'invention.

Selon une deuxième variante, le procédé selon le septième mode de réalisation comprend l'étape consistant à fournir un ensemble selon le second mode de réalisation.

Bien sûr, l'invention n'est pas limitée aux exemples qui viennent d'être décrits et de nombreux aménagements peuvent être apportés à ces exemples sans sortir du cadre de l'invention selon les revendications.

Ainsi, dans des variantes combinables entre elles des modes de réalisation précédemment décrits :
- le support selon l'invention permet, lorsqu'un échantillon 3 est inséré dans le support, d'imager, concomitamment aux essais mécaniques, les modifications microstructurales de l'échantillon 3 engendrées par les contraintes mécaniques auxquels l'échantillon 3 est soumis, et/ou- la source de rayons X selon l'invention est remplacé par une source de neutrons, et/ou le détecteur agencé pour détecter des rayons X selon l'invention est remplacé par un détecteur de neutrons, et/ou
- le support est agencé de sorte que l'échantillon ne soit pas manipulé durant le processus d'analyse, c'est-à-dire que l'échantillon n'est pas retiré du support et que le support n'est pas déplacé, et/ou
- les deux parties 28, 29 du support ne sont pas dissociables, et/ou
- lorsque l'échantillon 3 est placé dans la cavité 10, une seule des parois définissant le contour de la partie saillante 15 de la première portion 31 de l'échantillon 3 est portée au contact d'une des parois du logement 14 de la première zone 101 de la cavité 10, et/ou
- la tête 22 de la vis 1 est courbe concave et coopère avec une partie 41 courbe et convexe de l'élément de transfert 2, et/ou
- le support comprend plusieurs raidisseurs 38, et/ou
- le concentrateur de contraintes et de déformations 23 est un trou ménagé dans l'échantillon 3.

## Revendications

1. Support pour essais mécaniques in situ en laminographie comprenant :
- une cavité (10) comprenant :
• une première zone (101), agencée pour accueillir une première portion (31) d'un échantillon (3) complémentaire de la première zone de la cavité, ladite première zone comprenant des moyens de maintien (14, 16, 17, 18, 20, 21) de l'échantillon, lesdits moyens de maintien de l'échantillon étant agencés pour immobiliser la première portion (31) de l'échantillon dans le support,
• une deuxième zone (102) agencée pour accueillir une deuxième portion (32) de l'échantillon,
lesdites première (101) et deuxième (102) zones de la cavité étant contiguës et agencées pour accueillir les première (31) et deuxième (32) portions d'un échantillon (3) d'un seul tenant,
- un moyen (1, 2), dit de chargement mécanique, comprenant un élément de transfert (2) agencé pour être mis en mouvement dans la deuxième zone (102) de la cavité de sorte à, lorsqu'un échantillon (3) est placé dans la cavité (10), exercer une force mécanique sur la deuxième portion (32) de l'échantillon générant des contraintes et déformations dans une région donnée (24) de l'échantillon.

2. Support selon la revendication 1, dans lequel la cavité (10) est comprise au moins en partie entre deux faces planes (26) du support, les deux faces planes du support étant séparées d'une distance constituant l'épaisseur (27) de la cavité (10), ladite cavité présentant une forme de fente s'étendant selon un plan.

3. Support selon la revendication 1 ou 2, dans lequel l'élément de transfert (2) est agencé pour exercer une force selon une direction s'étendant depuis la première (101) vers la deuxième (102) zone de la cavité.

4. Support selon l'une quelconque des revendications précédentes, dans lequel le moyen de chargement mécanique (1, 2) est agencé pour convertir un mouvement de rotation en un mouvement de translation selon une direction s'étendant depuis la première (101) vers la deuxième (102) zone de la cavité.

5. Support selon l'une quelconque des revendications précédentes, dans lequel la deuxième zone (102) de la cavité comprend une partie (13) formant un levier, dite partie de levier (13), agencée pour que l'élément de transfert (2) exerce une force dans ladite partie de levier (13) de la deuxième zone (102) de la cavité (10).

6. Support selon l'une quelconque des revendications précédentes, considérée comme dépendante de la revendication 2, dans lequel la deuxième zone (102) de la cavité comprend un guide (4) agencé pour contraindre l'élément de transfert (2) à se déplacer le long dudit guide selon un mouvement de translation dans le plan dans lequel s'étend la cavité.

7. Support selon l'une quelconque des revendications précédentes, dans lequel les moyens de maintien (14, 16, 17, 18, 20, 21) sont agencés pour enchâsser ou enserrer, lorsqu'un échantillon (3) est placé dans la cavité (10), la première portion (31) de l'échantillon de sorte à immobiliser la première portion (31) de l'échantillon dans la première zone (101) de la cavité.

8. Support selon l'une quelconque des revendications précédentes, dans lequel les moyens de maintien (14, 16, 17, 18, 20, 21) comprennent un logement (14), agencé pour recevoir une partie saillante (15) de la première portion (31) de l'échantillon (3) complémentaire du logement (14).

9. Support selon la revendication précédente, dans lequel la première zone (101) de la cavité comprend un épaulement (16) qui est contigu au logement (14) de la cavité (10) et qui s'étend depuis la première zone (101) vers la deuxième zone (102) de la cavité.

10. Support selon la revendication précédente, dans lequel la première zone (101) de la cavité comprend une paroi (17), dite de maintien, située en regard de l'épaulement (16).

11. Support selon la revendication précédente, dans lequel :
- une paroi (18) de la première zone (101) de la cavité s'étend depuis le logement (14) de la première zone (101) de la cavité jusqu'à la paroi de maintien (17),
- une ouverture (19) s'étend depuis l'épaulement (16) jusqu'à la paroi de maintien (17) et relie les première (101) et deuxième (102) zones de la cavité (10).

12. Support selon la revendication précédente, dans lequel le logement (14) de la première zone (101) de la cavité comprend :
- une première paroi latérale (18) s'étendant selon une direction reliant le logement (14) à la paroi de maintien (17),
- une deuxième paroi latérale (20) située en regard de la première paroi latérale (18) du support,
- une paroi de fond (21) du logement (14) de la première zone (101) reliant les première (18) et deuxième (20) parois latérales du logement (14) du support ;
la paroi de fond (21) du logement (14) de la première zone (101) et les première (18) et deuxième (20) parois latérales du logement du support étant agencées de sorte à présenter une forme en U.

13. Support selon la revendication précédente, considérée comme dépendante de la revendication 5, dans lequel la partie de levier (13) est en saillie par rapport à un plan comprenant la paroi de fond (21) du logement (14) de la première zone (101) de la cavité (10) selon une direction reliant la paroi de maintien (17) au logement (14).

14. Support selon l'une quelconque des revendications 12 à 13, comprenant au moins un raidisseur (38) agencé pour augmenter une résistance du support au flambement, ledit au moins un raidisseur s'étendant le long :
- d'une bordure du support située au niveau de la première paroi latérale (18), et
- d'une bordure du support située au niveau de la paroi de maintien (17).

15. Support selon l'une quelconque des revendications précédentes, dans lequel le moyen de chargement mécanique (1, 2) comprend une vis (1) agencée pour être mise en rotation dans le support, et dans lequel l'élément de transfert (2) est agencé pour coopérer avec une tête (22) de la vis (1) de sorte à, lorsqu'un échantillon (3) est placé dans la cavité (10), transférer la force exercée lors de la rotation de la vis (1) depuis la tête (22) de la vis vers la deuxième portion (32) de l'échantillon.

16. Support selon la revendication précédente, dans lequel la vis (1) est agencée pour se déplacer, en étant mise en rotation, en longeant une bordure de la première zone (101) de la cavité (10).

17. Ensemble comprenant le support selon l'une quelconque des revendications 1 à 16 et un échantillon (3) dans la cavité (10) du support, l'ensemble comprenant un concentrateur de contraintes et de déformations (23) ménagé dans l'échantillon de sorte à positionner la région donnée (24) de l'échantillon dans laquelle sont générées les contraintes et déformations.

18. Dispositif d'imagerie par rayons X comprenant :
- un support pour essai mécanique selon l'une des revendications 1 à 16,
- une source de rayons X,
- au moins un détecteur agencé pour détecter des rayons X transmis et/ou diffractés et/ou diffusés à travers la région donnée (24) de l'échantillon (3) dans laquelle sont générées les contraintes et déformations.

19. Dispositif d'imagerie par rayon X comprenant :
- un ensemble selon la revendication 17,
- une source de rayons X,
- au moins un détecteur agencé pour détecter des rayons X transmis et/ou diffractés et/ou diffusés à travers la région donnée (24) de l'échantillon (3) dans laquelle sont générées les contraintes et déformations.

20. Procédé d'analyse par rayons X d'un échantillon (3) comprenant les étapes consistant à :
- fournir un support pour essais mécaniques selon l'une quelconque des revendications 1 à 16 dans un dispositif d'imagerie par rayons X,
- immobiliser la première portion (31) de l'échantillon (3) dans la première zone (101) de la cavité (10) du support via les moyens de maintien (14, 16, 17, 18, 20, 21),
- exercer une force mécanique générant des contraintes et déformations dans une région donnée (24) de l'échantillon par l'intermédiaire d'un moyen (1, 2), dit de chargement mécanique, comprenant un élément de transfert (2) agencé pour être mis en mouvement dans la deuxième zone (102) de la cavité,
- imager, au moyen du dispositif d'imagerie par rayons X, l'échantillon.

21. Procédé selon la revendication 20, l'étape d'immobiliser la première portion (31) de l'échantillon (3) consistant à fournir un logement (14) aux moyens de maintien (14, 16, 17, 18, 20, 21) du support de sorte à enchâsser ou enserrer la première portion (31) de l'échantillon (3) dans les moyens de maintien du support de sorte à immobiliser la première portion (31) de l'échantillon dans la première zone (101) de la cavité (10).

22. Procédé selon la revendication 20 ou 21, comprenant une étape consistant à ménager un concentrateur de contraintes et de déformations (24) dans l'échantillon (3) de sorte à positionner la région donnée de l'échantillon dans laquelle sont générées les contraintes et déformations.

## Patentansprüche

1. Träger für mechanische in-situ-Laminografie-Versuche, umfassend:
- einen Hohlraum (10), umfassend:
• einen ersten Bereich (101), der angeordnet ist, um einen ersten Abschnitt (31) einer Probe (3) ergänzend zum ersten Abschnitt des Hohlraumes aufzunehmen, wobei der erste Bereich Mittel zum Halten (14, 16, 17, 18, 20, 21) der Probe umfasst, wobei die Mittel zum Halten der Probe angeordnet sind, um den ersten Abschnitt (31) der Probe in dem Träger zu immobilisieren,
• einen zweiten Bereich (102), der angeordnet ist, um einen zweiten Abschnitt (32) der Probe aufzunehmen,
wobei der erste (101) und zweite (102) Bereich des Hohlraumes angrenzend, und angeordnet sind, um den ersten (31) und zweiten (32) Abschnitt einer Probe (3) in einem Stück aufzunehmen,
- ein sogenanntes mechanisches Lademittel (1, 2), das ein Übertragungselement (2) umfasst, das angeordnet ist, um in dem zweiten Bereich (102) des Hohlraumes in Bewegung versetzt zu werden, um, wenn eine Probe (3) in dem Hohlraum (10) platziert wird, eine mechanische Kraft auf den zweiten Abschnitt (32) der Probe auszuüben, welche Spannungen und Verformungen in einer gegebenen Region (24) der Probe erzeugt.

2. Träger nach Anspruch 1, wobei der Hohlraum (10) mindestens teilweise zwischen zwei ebenen Flächen (26) des Trägers umfasst ist, wobei die beiden ebenen Flächen des Trägers um einen Abstand getrennt sind, der die Dicke (27) des Hohlraumes (10) darstellt, wobei der Hohlraum eine Schlitzform aufweist, die sich entlang einer Ebene erstreckt.

3. Träger nach Anspruch 1 oder 2, wobei das Übertragungselement (2) angeordnet ist, um eine Kraft in einer Richtung auszuüben, die sich aus dem ersten (101) zum zweiten (102) Bereich des Hohlraumes erstreckt.

4. Träger nach einem der vorstehenden Ansprüche, wobei das mechanische Lademittel (1, 2) angeordnet ist, um eine Drehbewegung in eine Vorschubbewegung in einer Richtung umzuwandeln, die sich aus dem ersten (101) zum zweiten (102) Bereich des Hohlraumes erstreckt.

5. Träger nach einem der vorstehenden Ansprüche, wobei der zweite Bereich (102) des Hohlraumes einen Teil (13) umfasst, der einen Hebel, Hebelteil (13) genannt, bildet, der angeordnet ist, damit das Übertragungselement (2) eine Kraft in dem Hebelteil (13) des zweiten Bereichs (102) des Hohlraumes (10) ausübt.

6. Träger nach einem der vorstehenden Ansprüche, als von Anspruch 2 abhängig betrachtet, wobei der zweite Bereich (102) des Hohlraumes eine Führung (4) umfasst, die angeordnet ist, um das Übertragungselement (2) zu zwingen, sich gemäß einer Vorschubbewegung entlang der Führung in einer Ebene zu bewegen, in der sich der Hohlraum erstreckt.

7. Träger nach einem der vorstehenden Ansprüche, wobei die Mittel zum Halten (14, 16, 17, 18, 20, 21) angeordnet sind, um, wenn eine Probe (3) in dem Hohlraum (10) platziert wird, den ersten Abschnitt (31) der Probe einzufassen oder einzuspannen, um den ersten Abschnitt (31) der Probe in dem ersten Bereich (101) des Hohlraumes zu immobilisieren.

8. Träger nach einem der vorstehenden Ansprüche, wobei die Mittel zum Halten (14, 16, 17, 18, 20, 21) eine Aufnahme (14) umfassen, die angeordnet ist, um einen hervorstehenden Teil (15) des ersten zur Aufnahme (14) ergänzenden Abschnitts (31) der Probe (3) aufzunehmen.

9. Träger nach dem vorstehenden Anspruch, wobei der erste Bereich (101) des Hohlraumes einen Ansatz (16) umfasst, der an die Aufnahme (14) des Hohlraumes (10) angrenzend ist, und der sich aus dem ersten Bereich (101) in den zweiten Bereich (102) des Hohlraumes erstreckt.

10. Träger nach dem vorstehenden Anspruch, wobei der erste Bereich (101) des Hohlraumes eine sogenannte Haltewand (17) umfasst, die sich gegenüber dem Ansatz (16) befindet.

11. Träger nach dem vorstehenden Anspruch, wobei:
- sich eine Wand (18) des ersten Bereichs (101) des Hohlraumes aus der Aufnahme (14) des ersten Bereichs (101) des Hohlraumes bis zur Haltewand (17) erstreckt,
- sich eine Öffnung (19) aus dem Ansatz (16) bis zur Haltewand (17) erstreckt, und den ersten (101) und zweiten (102) Bereich des Hohlraumes (10) verbindet.

12. Träger nach dem vorstehenden Anspruch, wobei die Aufnahme (14) des ersten Bereichs (101) des Hohlraumes umfasst:
- eine erste Seitenwand (18), die sich in einer Richtung erstreckt, die die Aufnahme (14) mit der Haltewand (17) verbindet,
- eine zweite Seitenwand (20), die sich gegenüber der ersten Seitenwand (18) des Trägers befindet,
- eine Rückwand (21) der Aufnahme (14) des ersten Bereichs (101), die die erste (18) und zweite (20) Seitenwand der Aufnahme (14) des Trägers verbindet;
wobei die Rückwand (21) der Aufnahme (14) des ersten Bereichs (101) und die erste (18) und zweite (20) Seitenwand der Aufnahme des Trägers angeordnet sind, um eine U-Form aufzuweisen.

13. Träger nach dem vorstehenden Anspruch, als von Anspruch 5 abhängig betrachtet, wobei der Hebelteil (13) in Bezug auf eine Ebene, die die Rückwand (21) der Aufnahme (14) des ersten Bereichs (101) des Hohlraumes (10) umfasst, in einer Richtung hervorstehend ist, die die Haltewand (17) mit der Aufnahme (14) verbindet.

14. Träger nach einem der Ansprüche 12 bis 13, umfassend mindestens eine Versteifung (38), die angeordnet ist, um eine Knickfestigkeit des Trägers zu erhöhen, wobei sich die mindestens eine Versteifung erstreckt entlang:
- einer Kante des Trägers, die sich auf Höhe der ersten Seitenwand (18) befindet, und
- einer Kante des Trägers, die sich auf Höhe der Haltewand (17) befindet.

15. Träger nach einem der vorstehenden Ansprüche, wobei das mechanische Lademittel (1, 2) eine Schraube (1) umfasst, die angeordnet ist, um in dem Träger in Drehung versetzt zu werden, und wobei das Übertragungselement (2) angeordnet ist, um mit einem Kopf (22) der Schraube (1) derart zusammenzuwirken, um, wenn eine Probe (3) in dem Hohlraum (10) platziert wird, die beim Drehen der Schraube (1) vom Kopf (22) der Schraube ausgeübte Kraft auf den zweiten Abschnitt (32) der Probe zu übertragen.

16. Träger nach dem vorstehenden Anspruch, wobei die Schraube (1) angeordnet ist, um sich, während sie in Drehung versetzt wird, zu bewegen, indem sie eine Kante des ersten Bereichs (101) des Hohlraumes (10) entlangführt.

17. Einheit, umfassend den Träger nach einem der Ansprüche 1 bis 16, und eine Probe (3) in dem Hohlraum (10) des Trägers, wobei die Einheit einen Spannungs- und Verformungskonzentrator (23) umfasst, der in der Probe eingerichtet ist, um die gegebene Region (24) der Probe zu positionieren, in der die Spannungen und Verformungen erzeugt werden.

18. Röntgenstrahlen-Bildgebungsvorrichtung, umfassend:
- einen Träger für einen mechanischen Versuch nach einem der Ansprüche 1 bis 16,
- eine Röntgenstrahlenquelle,
- mindestens einen Detektor, der angeordnet ist, um gesendete und/oder gebeugte und/oder durch die gegebene Region (24) der Probe (3) verteilte Röntgenstrahlen, in der die Spannungen und Verformungen erzeugt werden, zu detektieren.

19. Röntgenstrahlen-Bildgebungsvorrichtung, umfassend:
- eine Einheit nach Anspruch 17,
- eine Röntgenstrahlenquelle,
- mindestens einen Detektor, der angeordnet ist, um gesendete und/oder gebeugte und/oder durch die gegebene Region (24) der Probe (3) verteilte Röntgenstrahlen, in der die Spannungen und Verformungen erzeugt werden, zu detektieren.

20. Verfahren zur Analyse durch Röntgenstrahlen einer Probe (3), die Schritte umfassend, bestehend aus:
- Bereitstellen eines Trägers für mechanische Versuche nach einem der Ansprüche 1 bis 16 in einer Röntgenstrahlen-Bildgebungsvorrichtung,
- Immobilisieren des ersten Abschnitts (31) der Probe (3) in dem ersten Bereich (101) des Hohlraumes (10) des Trägers über die Mittel zum Halten (14, 16, 17, 18, 20, 21),
- Ausüben einer mechanischen Kraft, die Spannungen und Verformungen in einer gegebenen Region (24) der Probe erzeugt, anhand eines sogenannten mechanischen Lademittels (1, 2), umfassend ein Übertragungselement (2), das angeordnet ist, um in dem zweiten Bereich (102) des Hohlraumes in Bewegung versetzt zu werden,
- Abbilden der Probe anhand der Röntgenstrahlen-Bildgebungsvorrichtung.

21. Verfahren nach Anspruch 20, wobei der Schritt des Immobilisierens des ersten Abschnitts (31) der Probe (3) darin besteht, eine Aufnahme (14) für die Mittel zum Halten (14, 16, 17, 18, 20, 21) des Trägers bereitzustellen, um den ersten Abschnitt (31) der Probe (3) in den Mitteln zum Halten des Trägers einzufassen oder einzuspannen, um den ersten Abschnitt (31) der Probe in dem ersten Bereich (101) des Hohlraumes (10) zu immobilisieren.

22. Verfahren nach Anspruch 20 oder 21, umfassend einen Schritt, der darin besteht, einen Konzentrator für Spannungen und Verformungen (24) in der Probe (3) einzurichten, um die gegebene Region der Probe zu positionieren, in der die Spannungen und Verformungen erzeugt werden.

## Claims

1. Support for in-situ mechanical laminography tests, comprising:
- a cavity (10) comprising:
• a first zone (101), arranged to accommodate a first portion (31) of a specimen (3) complementary with the first zone of the cavity, said first zone comprising means (14, 16, 17, 18, 20, 21) for holding the specimen, said means for holding the specimen being arranged to immobilise the first portion (31) of the specimen in the support,
• a second zone (102) arranged to accommodate a second portion (32) of the specimen,
said first (101) and second (102) zones of the cavity being adjacent and arranged to accommodate the first (31) and second (32) portions of a whole specimen (3),
- a means (1, 2), referred to as mechanical loading means, comprising a transfer element (2) arranged to be set in motion in the second zone (102) of the cavity so as to, when a specimen (3) is placed in the cavity (10), exert a mechanical force on the second portion (32) of the specimen producing stresses and deformations in a given region (24) of the specimen.

2. Support according to claim 1, wherein the cavity (10) is comprised at least in part between two planar faces (26) of the support, the two planar faces of the support being separated by a distance constituting the thickness (27) of the cavity (10), said cavity having a slot shape extending along a plane.

3. Support according to claim 1 or 2, wherein the transfer element (2) is arranged to exert a force along a direction extending from the first (101) to the second (102) zone of the cavity.

4. Support according to any one of the preceding claims, wherein the mechanical loading means (1, 2) is arranged to convert a rotation movement into a translation movement along a direction extending from the first (101) to the second (102) zone of the cavity.

5. Support according to any one of the preceding claims, wherein the second zone (102) of the cavity comprises a part (13) forming a lever, referred to as lever part (13), arranged so that the transfer element (2) exerts a force in said lever part (13) of the second zone (102) of the cavity (10).

6. Support according to any one of the preceding claims, considered as dependent on claim 2, wherein the second zone (102) of the cavity comprises a guide (4) arranged to constrain the transfer element (2) to move along said guide according to a translation movement in the plane wherein the cavity extends.

7. Support according to any one of the preceding claims, wherein the holding means (14, 16, 17, 18, 20, 21) are arranged to set or enclose, when a specimen (3) is placed in the cavity (10), the first portion (31) of the specimen so as to immobilise the first portion (31) of the specimen in the first zone (101) of the cavity.

8. Support according to any one of the preceding claims, wherein the holding means (14, 16, 17, 18, 20, 21) comprise a housing (14), arranged to receive a projecting part (15) of the first portion (31) of the specimen (3) complementary with the housing (14).

9. Support according to the preceding claim, wherein the first zone (101) of the cavity comprises a shoulder (16) which is adjacent to the housing (14) of the cavity (10) and which extends from the first zone (101) to the second zone (102) of the cavity.

10. Support according to the preceding claim, wherein the first zone (101) of the cavity comprises a wall (17), referred to as holding wall, located facing the shoulder (16).

11. Support according to the preceding claim, wherein:
- a wall (18) of the first zone (101) of the cavity extends from the housing (14) of the first zone (101) of the cavity to the holding wall (17),
- an opening (19) extends from the shoulder (16) to the holding wall (17) and connects the first (101) and second (102) zones of the cavity (10).

12. Support according to the preceding claim, wherein the housing (14) of the first zone (101) of the cavity comprises:
- a first side wall (18) extending along a direction connecting the housing (14) to the holding wall (17),
- a second side wall (20) located facing the first side wall (18) of the support,
- a back wall (21) of the housing (14) of the first zone (101) connecting the first (18) and second (20) side walls of the housing (14) of the support;
the back wall (21) of the housing (14) of the first zone (101) and the first (18) and second (20) side walls of the housing of the support being arranged so as to have a U shape.

13. Support according to the preceding claim, considered as dependent on claim 5, wherein the lever part (13) is projecting with respect to a plane comprising the back wall (21) of the housing (14) of the first zone (101) of the cavity (10) along a direction connecting the holding wall (17) to the housing (14).

14. Support according to any one of claims 12 to 13, comprising at least one stiffener (38) arranged to increase a resistance of the support to buckling, said at least one stiffener extending along:
- an edge of the support located at the first side wall (18), and
- an edge of the support located at the holding wall (17).

15. Support according to any one of the preceding claims, wherein the mechanical loading means (1, 2) comprises a screw (1) arranged to be rotated in the support, and wherein the transfer element (2) is arranged to cooperate with a head (22) of the screw (1) so as to, when a specimen (3) is placed in the cavity (10), transfer the force exerted during the rotation of the screw (1) from the head (22) of the screw to the second portion (32) of the specimen.

16. Support according to the preceding claim, wherein the screw (1) is arranged to move, while rotating, along an edge of the first zone (101) of the cavity (10).

17. Assembly comprising the support according to any one of claims 1 to 16 and a specimen (3) in the cavity (10) of the support, the assembly comprises a stress and deformation concentrator (23) arranged in the specimen so as to position the given region (24) of the specimen wherein the stresses and deformations are generated.

18. X-ray imaging device comprising:
- a support for mechanical test according to one of claims 1 to 16,
- an X-ray source,
- at least one detector arranged to detect X-rays transmitted and/or diffracted and/or diffused through the given region (24) of the specimen (3) wherein the stresses and deformations are generated.

19. X-ray imaging device comprising:
- an assembly according to claim 17,
- an X-ray source,
- at least one detector arranged to detect X-rays transmitted and/or diffracted and/or diffused through the given region (24) of the specimen (3) wherein the stresses and deformations are generated.

20. Method for analysis by X-rays of a specimen (3) comprising the steps consisting of:
- providing a support for mechanical tests according to any one of claims 1 to 16 in an X-ray imaging device,
- immobilising the first portion (31) of the specimen (3) in the first zone (101) of the cavity (10) of the support via the holding means (14, 16, 17, 18, 20, 21),
- exerting a mechanical force generating stresses and deformations in a given region (24) of the specimen via a means (1, 2), referred to as mechanical loading means, comprising a transfer element (2) arranged to be set in motion in the second zone (102) of the cavity,
- imaging, by means of the X-ray imaging device, the specimen.

21. Method according to claim 20, the step of immobilising the first portion (31) of the specimen (3) consisting of providing a housing (14) to the means (14, 16, 17, 18, 20, 21) for holding the support so as to set or enclose the first portion (31) of the specimen (3) in the means for holding the support so as to immobilise the first portion (31) of the specimen in the first zone (101) of the cavity (10).

22. Method according to claim 20 or 21, comprising a step consisting of arranging a stress and deformation concentrator (24) in the specimen (3) so as to position the given region of the specimen wherein the stresses and deformations are generated.
